# EUROPEAN PATENT APPLICATION

(11) **EP 4 830 505 A1**
(43) Date of publication of application: **28.10.2026**
(21) Application number: 26161849.0
(22) Date of filing: 03.03.2026
(51) Int. Cl.: A01D 34/66, A01D 34/81, A01D 34/78

(54) **MOWER**

(30) Priority: 24.04.2025 CN 202510527264; 24.04.2025 CN 202510522436
(71) Applicant: Nanjing Chervon Industry Co., Ltd., Nanjing, Jiangsu 211106 (CN)
(72) Inventor: XU, Junfei, Nanjing, Jiangsu 211106 (CN); LU, Wei, Nanjing, Jiangsu 211106 (CN); YANG, Jian, Nanjing, Jiangsu 211106 (CN); WANG, Zhen, Nanjing, Jiangsu 211106 (CN); YAMAOKA, Toshinari, Nanjing, Jiangsu 211106 (CN); CHEN, Jie, Nanjing, Jiangsu 211106 (CN); WANG, Yaguang, Nanjing, Jiangsu 211106 (CN); ZHANG, Min, Nanjing, Jiangsu 211106 (CN)
(74) Representative: Sun, Yiming

(57) **Abstract**

A mower includes: a machine body including a vehicle frame; a wheel set configured to support the machine body; a cutting assembly mounted on the machine body and including a cutting element for cutting vegetation; a deck assembly mounted on the vehicle frame and used for accommodating the cutting element; and a deck mounting assembly including a first mounting member, where one mounting end of the first mounting member is connected to the deck assembly, and the other mounting end of the first mounting member is connected to the vehicle frame. At least one mounting end of the first mounting member is connected in a floating manner, and at least one mounting end of the first mounting member is provided with a buffer mechanism.

## Description

### TECHNICAL FIELD

The present application relates to a power tool and, in particular, to a mower.

### BACKGROUND

In the related art, electric mowing devices are used for outdoor operations and widely applied in fields such as lawn and vegetation trimming. The specialized functions lead to the specific structures. In the related art, due to the specific operating environment and the relatively complex terrain, the electric mowing device causes the user to experience significant jolting during operation.

This part provides background information related to the present application, and the background information is not necessarily the existing art.

### SUMMARY

An object of the present application is to solve or at least alleviate part or all of the preceding problems. Therefore, an object of the present application is to provide a mower.

To achieve the preceding object, the present application adopts the technical solutions below.

A mower includes: a machine body including a vehicle frame; a wheel set configured to support the machine body; a cutting assembly mounted on the machine body and including a cutting element for cutting vegetation; a deck assembly mounted on the vehicle frame and accommodating the cutting element; and a deck mounting assembly including a first mounting member, where one mounting end of the first mounting member is connected to the deck assembly, and the other mounting end of the first mounting member is connected to the vehicle frame. At least one mounting end of the first mounting member is connected in a floating manner, and at least one mounting end of the first mounting member is provided with a buffer mechanism.

In some examples, the cutting assembly further includes a mowing motor mounted on the deck assembly.

In some examples, the buffer mechanism is configured to absorb the movement of the first mounting member relative to the deck assembly.

In some examples, the buffer mechanism includes an elastic member.

In some examples, the first mounting member includes a connecting rod, a front end of the connecting rod is connected to the vehicle frame in the floating manner, and a rear end of the connecting rod is fixedly mounted to the deck assembly.

In some examples, in the case where the deck assembly sways, the deck assembly causes the connecting rod to move along an extension direction of the connecting rod.

In some examples, a body of the connecting rod is configured to be a cylindrical metal structure.

In some examples, the first mounting member further includes: a first fixing member, where the first fixing member is mounted to the front end of the connecting rod and configured to limit the connecting rod when the connecting rod is connected to the vehicle frame; and a second fixing member disposed on the connecting rod and located behind the first fixing member.

In some examples, the buffer mechanism is disposed between the first fixing member and the second fixing member.

In some examples, the front end of the connecting rod is slidably connected to the first fixing member, and the first fixing member allows the connecting rod to slide on the first fixing member along an extension direction of the connecting rod.

In some examples, the first mounting member further includes a third fixing member disposed at the rear end of the connecting rod to fixedly mount the connecting rod to the deck assembly.

In some examples, the first mounting member is disposed on a front portion of the deck assembly, and the deck mounting assembly further includes a second mounting member disposed on a rear portion of the deck assembly and disposed on an outer side of the vehicle frame.

In some examples, the second mounting member includes a suspension arm having a U-shaped cross section.

In some examples, the mower further includes: an operating lever disposed on the machine body and configured to control a traveling state of the wheel set; and a damper connected to the operating lever through a connecting portion and configured to absorb the sway of the operating lever, where the damper is disposed above the vehicle frame and is closer to an inner side of the vehicle frame than the first mounting member.

In some examples, the connecting portion includes multiple links and pivot shafts, and each of the pivot shafts is connected between two of the multiple links.

A mower includes: a machine body including a vehicle frame; a wheel set configured to support the machine body; a cutting assembly mounted on the machine body and including a cutting element for cutting vegetation; a deck assembly mounted on the vehicle frame and used for accommodating the cutting element; and a deck mounting assembly including a first mounting member, where the first mounting member includes a connecting rod, one end of the connecting rod is connected to the deck assembly, and the other end of the connecting rod is connected to the vehicle frame. In the case where the deck assembly sways, the deck assembly causes the connecting rod to move along an extension direction of the connecting rod.

A mower includes: a machine body including a vehicle frame; a wheel set configured to support the machine body; a cutting assembly mounted on the machine body and including a cutting element for cutting vegetation; a deck assembly mounted on the vehicle frame and used for accommodating the cutting element; and a deck mounting assembly including a first mounting member, where the first mounting member includes a connecting rod, one end of the connecting rod is connected to the deck assembly, and the other end of the connecting rod is connected to the vehicle frame. The connecting rod is configured to be a metal rod, at least one end of the connecting rod is slidably connected to the vehicle frame along an axial direction of the connecting rod, and a buffer mechanism is disposed on the connecting rod to buffer the axial sliding of the connecting rod.

In some examples, one end of the connecting rod is slidably connected to the vehicle frame along the axial direction, and the other end of the connecting rod is fixedly connected to the deck assembly.

In some examples, the first mounting member further includes: a first fixing member, where the first fixing member is mounted to a front end of the connecting rod and configured to limit the connecting rod when the connecting rod is connected to the vehicle frame; and a second fixing member disposed on the connecting rod and located behind the first fixing member.

In some examples, the buffer mechanism is disposed between the first fixing member and the second fixing member.

A mower includes: a machine body including a vehicle frame; a wheel set configured to support the machine body; a cutting assembly mounted on the machine body and including a cutting element for cutting vegetation; and a control module including multiple control boards capable of controlling at least the wheel set and the cutting assembly. The machine body includes an accommodation region for arranging at least the control boards, where the accommodation region is divided by a partition feature into a first chamber and a second chamber, the multiple control boards are arranged in the first chamber, non-control components are arranged in the second chamber, and the non-control components include at least an electromagnetic compatibility (EMC) component.

In some examples, the first chamber is configured to be a semi-enclosed chamber, and the second chamber is located inside the opening of the semi-enclosed chamber and adjacent to the opening end of the semi-enclosed chamber.

In some examples, the control module includes multiple cutting control boards and multiple traveling control boards; the cutting control boards are arranged side by side on one side of the semi-enclosed chamber; and the traveling control boards are symmetrically arranged on two sides of the semi-enclosed chamber.

In some examples, the wheel set further includes a traveling motor and wheels driven by the traveling motor; the cutting assembly further includes a cutting motor for controlling the cutting element to perform cutting; the traveling control board has a first connection terminal for connecting the traveling motor; the cutting control board has a second connection terminal for connecting the cutting motor; the lead-out direction of the first connection terminal is toward the opening of the semi-enclosed chamber; and the lead-out direction of the second connection terminal is toward the bottom of the semi-enclosed chamber.

In some examples, the lead-out direction of the first connection terminal is opposite to the lead-out direction of the second connection terminal.

In some examples, a negative electrode conductive plate is further provided and configured to be strip-shaped, and the multiple control boards are distributed on two sides of the negative electrode conductive plate along a length direction.

In some examples, the control module further includes a positive bus bar for connecting positive wires of the control boards and forming the common positive electrode of the control module; and the positive bus bar is disposed in the second chamber.

In some examples, the control module is further provided with a signal wiring harness. The signal wiring harness includes a harness body and harness branches branching out from the harness body. The multiple control boards are distributed on two sides of the harness body and communicatively connected to different harness branches, respectively.

In some examples, in the control module, at least the positive wires of the control boards intersect with the signal wiring harness.

In some examples, the EMC component includes a magnetic ring.

In some examples, an overcurrent protection device is disposed on the control board. One end of the overcurrent protection device is connected to the control board, and the other end of the overcurrent protection device is fixed to the accommodation region. A limiting structure for the overcurrent protection device is provided in the accommodation region.

In some examples, the mower further includes: a battery compartment configured to accommodate multiple battery packs; and a power management module mounted outside the battery compartment and controlling at least the charging and discharging of the battery packs. The power management module includes a battery control board and a heat sink, and power terminals on the battery control board extend toward the heat sink.

A mower includes: a machine body including a vehicle frame; a wheel set configured to support the machine body; a cutting assembly mounted on the machine body and including a cutting element for cutting vegetation; a control module including multiple control boards capable of controlling at least the wheel set and the cutting assembly; and a negative electrode conductive plate for electrically connecting negative terminals of the multiple control boards. The negative electrode conductive plate is configured to be strip-shaped, and the multiple control boards are distributed on two sides of the negative electrode conductive plate along a length direction.

In some examples, the control module includes multiple cutting control boards and multiple traveling control boards, the cutting control boards are arranged on one side of the strip-shaped conductive plate, and the traveling control boards are arranged on the other side of the strip-shaped conductive plate.

In some examples, the extension direction of the harness body is basically consistent with the extension direction of the strip-shaped conductive plate.

A mower includes: a machine body including a vehicle frame; a wheel set configured to support the machine body; a cutting assembly mounted on the machine body and including a cutting element for cutting vegetation; and a control module including multiple control boards capable of controlling at least the wheel set and the cutting assembly. The machine body includes an accommodation region for arranging at least the control boards, where the accommodation region is divided by a partition feature into a first chamber and a second chamber, and the control boards are arranged in the first chamber. The control module further includes a positive bus bar disposed in the second chamber and used for connecting positive wires of the control boards and forming the common positive electrode of the control module.

In some examples, the first chamber is configured to be a U-shaped chamber, and the second chamber is located inside the U-shaped opening of the U-shaped chamber and adjacent to the U-shaped opening end of the U-shaped chamber.

In some examples, the positive bus bar is disposed at the U-shaped opening.

In some examples, multiple EMC components are further disposed in the second chamber and used for suppressing electromagnetic interference (EMI) from the positive wires.

### BRIEF DESCRIPTION OF DRAWINGS

FIG. 1 is a perspective view of a mower according to an example of the present application.
FIG. 2 is a schematic view illustrating that a power supply is adapted to different power tools as an example of the present application.
FIG. 3 is a schematic view illustrating some structures of a mower as an example of the present application.
FIG. 4 is a structural view of a deck assembly and a deck mounting assembly of a mower as an example of the present application.
FIG. 5A is a structural view of a deck mounting assembly as an example.
FIG. 5B is a structural view of a deck mounting assembly as another example.
FIG. 6 is a schematic view illustrating some structures of a mower as an example of the present application, mainly illustrating some connection structures related to a deck assembly.
FIG. 7 is a top view illustrating some structures as an example of the present application.
FIG. 8 is a structural view of a second mounting member in FIG. 6.
FIG. 9 is a schematic view of a height adjustment assembly as an example of the present application.
FIG. 10 is a schematic view of a limiting member in FIG. 9.
FIG. 11 is a schematic view of an adjustment member in FIG. 9.
FIG. 12 is a schematic view of some structures in FIG. 6 from another perspective.
FIG. 13 is a structural view illustrating the connection of an operating lever, a connecting portion, a damper, and a vehicle frame in FIG. 6.
FIG. 14 is a schematic view illustrating some structures of a mower with a support assembly removed according to an example of the present application.

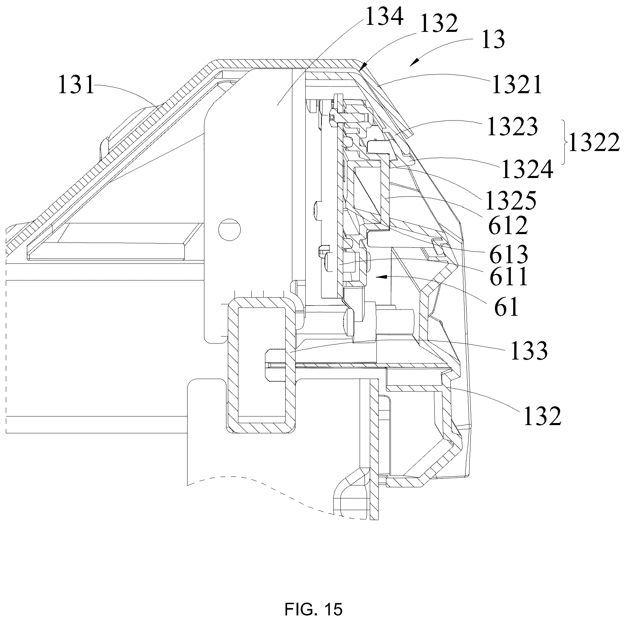

FIG. 15 is a structural view of a front frame assembly and a front illumination assembly according to the present application.
FIG. 16 is a schematic view illustrating the internal structure of a control module.
FIG. 17 is a structural view of a negative electrode conductive plate according to the present application.
FIG. 18 is a schematic view illustrating the internal structure of a control module from another perspective.
FIG. 19 is a structural view of a signal wiring harness according to the present application.
FIG. 20 is a structural view of a power management module, where a dashed box represents a battery compartment.
FIG. 21 is a schematic view of some structures of the power management module in FIG. 20.
FIG. 22 is a sectional view of FIG. 21 taken along A-A.
FIG. 23 is a sectional view of FIG. 21 taken along B-B.
FIG. 24 is a schematic view of a flexible conductive portion in FIG. 21 according to an example.
FIG. 25 is a schematic view of a flexible conductive portion in FIG. 21 according to another example.

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate member and the two members or assemblies are connected by the at least one intermediate member. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with a quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, a lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned units.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Benefits, other advantages, and solutions to problems are described below with regard to specific embodiments. However, the benefits, advantages, solutions to problems, and any feature(s) that may cause any benefit, advantage, or solution to occur or become more pronounced are not to be construed as a critical, required, or essential feature of any or all the claims.

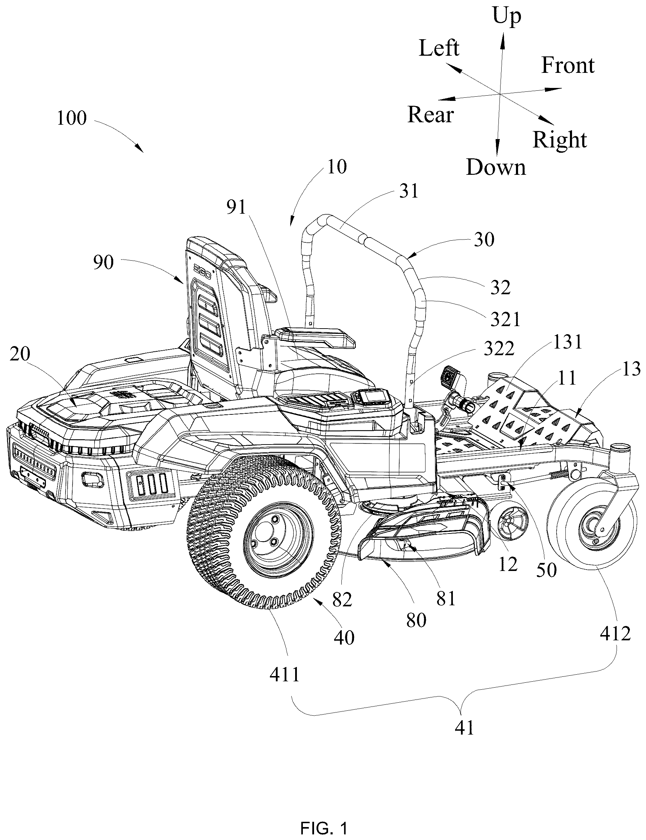

As shown in FIG. 1, a user may sit on, stand on, or stand behind an electric working device disclosed in the present application to operate the electric working device. For example, the electric working device may be a utility vehicle (UTV). In the related art, the UTVs include a four-wheel all-terrain vehicle (ATV), a multi-purpose ATV, and a go-kart. The electric working device may be a manned snow thrower or an electric motorcycle.

In some examples, the electric working device may be a hand-push working device. When operating the hand-push working device, the user stands behind the hand-push working device and pushes the hand-push working device to travel on the ground.

In this example, the electric working device is a mowing device, such as a mower 100, used for trimming lawns and other vegetation. The directions of front, rear, left, right, up, and down are described as directions shown in FIG. 1. Specifically, when the user sits or stands on the mower 100 on the ground, it is defined that a direction which the user faces is front, a direction which the user faces away from is rear, a direction on a left-hand side of the user is left, a direction on a right-hand side of the user is right, a direction facing the ground is down, and a direction away from the ground is up.

As shown in FIGS. 1 to 3, in this example, the case where the mower 100 is a riding mower is used as an example. The user sits on the riding mower to operate the riding mower. In the following disclosure, a riding mower 100 is used for referring to the electric working device. Similarly, the riding mower 100 is used for referring to the mower. Such references are used for the convenience of the description of the disclosure, and the mower may be another product described above, such as a stand-on mower with a standing platform for the user to stand thereon during operation or a push mower operated by the user standing on the ground behind the mower.

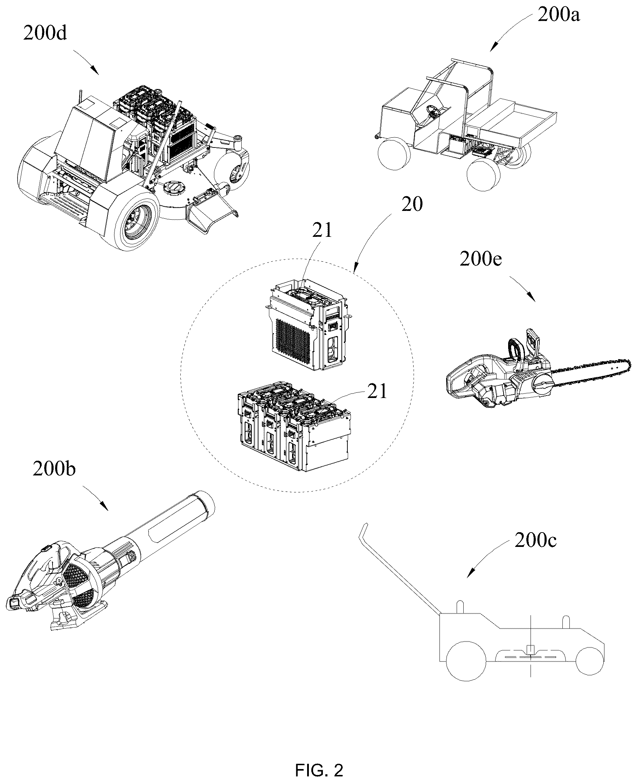

The riding mower 100 includes a machine body 10 and a power supply 20. The power supply 20 is disposed on the machine body 10. The power supply 20 includes multiple battery packs 21 and is configured to supply power to at least a traveling motor or a mowing motor. The electric riding mower 100 is more environmentally friendly and more energy-efficient than a fuel-based riding mower 100. At least one of the multiple battery packs 21 is detachably mounted to a coupling portion of the riding mower 100. In some examples, the preceding coupling portion includes a battery compartment 22. Optionally, the multiple battery packs 21 are configured to be detachable from the riding mower 100 to supply power to another power tool or a UTV 200a. For example, FIG. 2 shows a power supply platform of the battery packs 21. It is to be understood that the battery packs 21 can supply power to a power tool on the power supply platform. Optionally, the power tool may be a garden tool, such as a string trimmer, a blower 200b, or a stand-on mower 200d. The power tool 200 may be a handheld power tool, such as a chainsaw 200e or a hedge trimmer. The power tool may be a hand-push power tool, such as a push snow thrower or a push mower 200c. The power tool may be a drilling tool, a sawing tool, an electric garden tool, or the like.

The machine body 10 includes a vehicle frame 11. The riding mower 100 or the machine body 10 includes a wheel set 40, an operating assembly 30, a support assembly 90, and a working assembly 80. The vehicle frame 11 extends basically along the front and rear direction and is used for mounting the wheel set 40, the operating assembly 30, the support assembly 90, and the working assembly 80.

The wheel set 40 includes wheels 41 and a drive assembly 42. The wheels 41 support the machine body 10, and the drive assembly 42 is configured to drive the riding mower 100 to travel. In some examples, the wheel set 40 includes components such as a traveling track, thereby driving the riding mower 100 to travel. The drive assembly 42 is configured to drive the traveling track to move. In this example, the wheels 41 include rear traveling wheels 411 and front traveling wheels 412. Optionally, the rear traveling wheels 411 include a left rear traveling wheel 411L and a right rear traveling wheel 411R. The front traveling wheels 412 include a left front traveling wheel 412L and a right front traveling wheel 412R. The drive assembly 42 includes the traveling motor that drives the wheels to rotate. The traveling motor drives the rear traveling wheels 411 or the front traveling wheels 412 to rotate and is configured to implement a traveling function of the riding mower 100. Optionally, one, two, three, or four traveling motors may be provided. For example, the wheel set 40 includes a first drive wheel and a second drive wheel that receive power from the traveling motor and drive the riding mower to travel. In this example, the first drive wheel is the left rear traveling wheel 411L, and the second drive wheel is the right rear traveling wheel 411R. The traveling motor includes a first motor 421 for providing a driving force for the left rear traveling wheel 411L and a second motor 422 for providing a driving force for the right rear traveling wheel 411R. For convenience of reference, in the subsequent description, the first drive wheel 411L is used for referring to the left rear traveling wheel, and the second drive wheel 411R is used for referring to the right rear traveling wheel. The wheel set 40 separately provides driving forces for the first drive wheel 411L and the second drive wheel 411R in an independently driving manner. Optionally, the front traveling wheels 412 are configured to be omni wheels so that the riding mower 100 can turn in another direction deviating from the front and rear direction.

The operating assembly 30 is operated by the user and indicates desired operations of the user to control the riding mower 100 to move forward, move backward, and turn. The operating assembly 30 includes operating levers. In this example, the operating assembly 30 includes a first operating lever 31 and a second operating lever 32. The steering and the straight traveling speed of the riding mower 100 are controlled according to tilt angles of the first operating lever 31 and the second operating lever 32. In other alternative examples, the operating assembly 30 includes a steering wheel, such as a circular standard steering wheel, a flat-bottom or flat-top steering wheel, a rectangular steering wheel, a multi-functional steering wheel, a foldable steering wheel, or a touch steering wheel.

The support assembly 90 is used for supporting an operator, and the support assembly 90 is mounted on the machine body 10. The support assembly 90 includes a seat 91. The seat 91 is mounted to the vehicle frame 11 and used for the user to sit on.

The working assembly 80 is mounted onto the machine body 10 and is at least partially disposed between the first drive wheel 411L and the second drive wheel 411R. It is to be explained that "between the first drive wheel 411L and the second drive wheel 411R" may mean that, in a top projected view, the projection of the working assembly 80 at least partially falls within a longitudinal strip-shaped region with the center points of the first drive wheel 411L and the second drive wheel 411R as the left and right boundaries.

In this example, the working assembly 80 is a cutting assembly. The cutting assembly is mounted at the bottom of the vehicle frame 11, and at least part of the cutting assembly is mounted between the first drive wheel 411L and the second drive wheel 411R. For example, the cutting assembly is mounted between the rear traveling wheels 411 and the front traveling wheels 412. For convenience of reference, in the subsequent description, a cutting assembly 80 is used for referring to the working assembly.

The cutting assembly 80 includes a cutting element for cutting vegetation and a mowing motor 82 for driving the cutting element. In this example, the cutting element is a mowing blade 81, and the mowing motor 82 is specifically configured to be a mowing electric motor. A mowing electric motor 82 is used subsequently instead of the mowing motor, which is not intended to limit the present invention. In this example, the cutting assembly 80 includes multiple mowing blades 81 and mowing electric motors 82 driving the mowing blades 81, respectively. That is to say, the number of the provided mowing electric motors 82 corresponds to the number of the mowing blades 81. In some examples, the cutting assembly 80 includes multiple mowing blades 81 and the mowing electric motor 82 for driving the mowing blades 81. One mowing electric motor 82 is provided, or the number of mowing electric motors 82 is less than the number of mowing blades 81. That is to say, one mowing electric motor 82 may drive the multiple mowing blades 81.

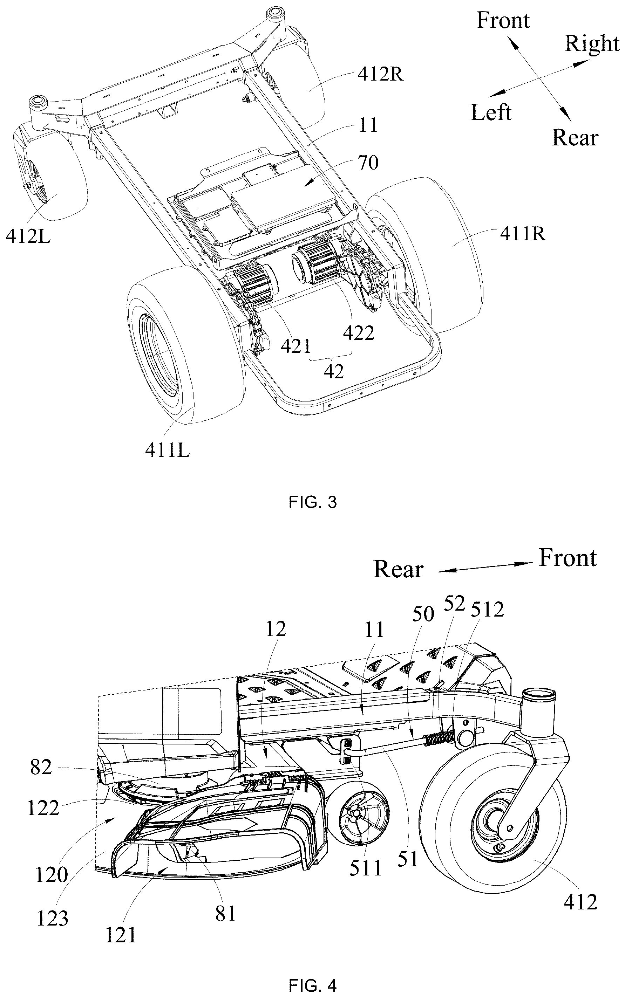

As shown in FIGS. 1 and 4, a deck assembly 12 is further included and mounted onto the machine body 10. The deck assembly 12 includes a mowing deck 120 formed on or connected to the deck assembly 12, and the mowing deck 120 has a downward-opening cutting chamber 121. The cutting chamber 121 accommodates at least a portion of the mowing blades 81. The deck assembly 12 includes a top wall 122, a sidewall 123 extending downward from the top wall 122 and forming a circumferential enclosure, and an opening facing downward. The mowing electric motor 82 is disposed above the top wall 122, and an output shaft of the mowing electric motor 82 drives the mowing blade 81 after passing through the top wall 122.

As shown in FIG. 1 and FIGS. 4 to 6, a deck mounting assembly 50 is further included and configured to connect the deck assembly 12 to the vehicle frame 11. The deck mounting assembly 50 includes at least first mounting members 51, and the first mounting member 51 includes a first mounting end 511 and a second mounting end 512. For example, the first mounting end 511 is connected to the deck assembly 12, and the second mounting end 512 is connected to the vehicle frame 11. At least one mounting end of the first mounting member 51 is connected in a floating manner, and at least one mounting end of the first mounting member 51 is provided with a buffer mechanism 52. For example, the same mounting end is connected in a floating manner and integrated with the buffer mechanism 52. For example, one mounting end is connected in a floating manner or provided with the buffer mechanism 52. For example, one mounting end is neither connected in a floating manner nor provided with the buffer mechanism 52. In this example, when the second mounting end 512 and the vehicle frame 11 are connected in a floating manner, the floating connection is defined such that the second mounting end 512 and the vehicle frame 11 can move relative to each other in one or more directions within a certain range, but the connection between the second mounting end 512 and the vehicle frame 11 is not broken. It is to be understood that even if the second mounting end 512 and the vehicle frame 11 move relative to each other, the transmission of the force or torque still exists within the allowable displacement range. The direction in which relative displacement occurs includes an axial direction, a radial direction, or an angular direction.

In this example, the mounting end refers to the position or region for fixing or connecting, and the mounting end is not necessarily a mounting structure. It is to be understood that the first mounting end 511 is defined as follows: when the deck assembly 12 and the first mounting member 51 are connected through a mounting structure, the position or region on the first mounting member 51 where the mounting structure is located is the first mounting end 511, and the first mounting end 511 may be a mounting point or a mounting position or region (the position or region covers the mounting structure). The second mounting end 512 is defined as follows: when the vehicle frame 11 and the first mounting member 51 are connected through another mounting structure, the position or region on the first mounting member 51 where the mounting structure is located is the second mounting end 512, and the second mounting end 512 may be a mounting point or a mounting position or region (the position or region covers the mounting structure).

During the operation on uneven lawns, a suspension system for mounting the deck assembly 12 and the vehicle frame 11 of the mower sways violently due to the undulations on the ground, resulting in significant mechanical noise. In this example, at least one mounting end is connected in a floating manner and at least one mounting end is provided with the buffer mechanism 52 so that the sway is absorbed, and noise issues are mitigated, thereby significantly improving operational comfort.

In this example, the buffer mechanism 52 is configured to absorb the sway of the first mounting member 51 relative to the deck assembly 12. For example, the buffer mechanism 52 includes an elastic member 521. For example, the buffer mechanism 52 includes a hydraulic buffer, a spring, or rubber.

The first mounting member 51 includes a connecting rod 510. The first mounting end 511 and the second mounting end 512 belong to the connecting rod 510. It is to be understood that one end of the connecting rod 510 is connected to the deck assembly 12, and the other end of the connecting rod 510 is connected to the vehicle frame 11. In this example, the rear end of the connecting rod 510 is connected to the deck assembly 12, that is, the rear end of the connecting rod 510 is the first mounting end 511. The front end of the connecting rod 510 is connected to the vehicle frame 11, that is, the front end of the connecting rod 510 is the second mounting end 512. When the deck assembly 12 sways, the deck assembly 12 causes the connecting rod 510 to move along an extension direction of the connecting rod 510, thereby absorbing the sway of the deck assembly 12 and causing the connecting rod 510 to move relative to the vehicle frame 11. In this example, the connecting rod 510 extends along the front and rear direction. For example, the extension direction of the connecting rod 510 forms an included angle with the horizontal plane, and the connecting rod 510 extends obliquely along the front and rear direction.

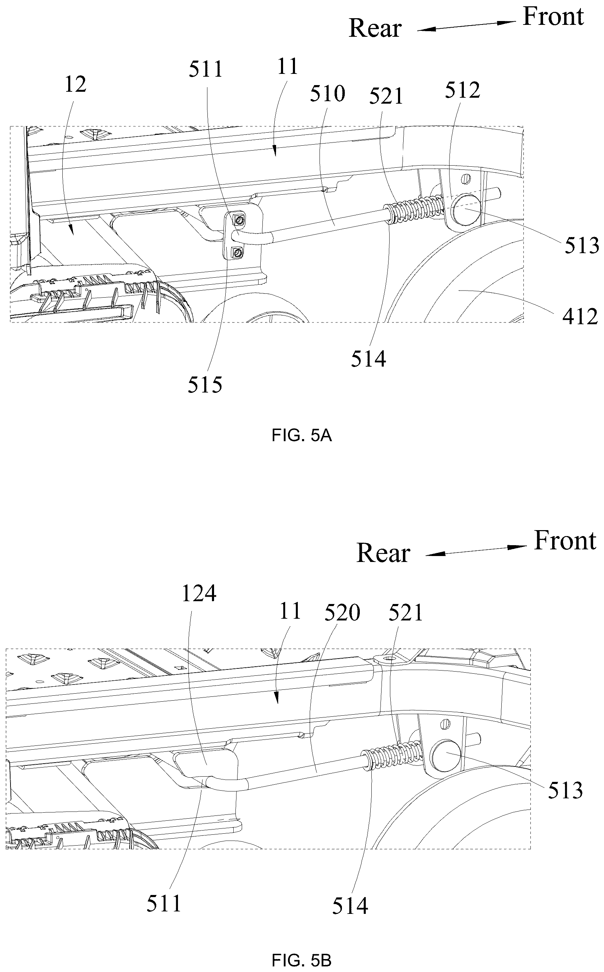

The main portion or most of the body of the connecting rod 510 is configured to be a metal rod. For example, the main portion or most of the body of the connecting rod 510 is configured to be a cylindrical metal structure. One end of the connecting rod 510, that is, the front end, is connected to the vehicle frame 11 in a floating manner, and the other end of the connecting rod 510, that is, the rear end, is fixedly mounted to the deck assembly 12. In this example, the buffer mechanism 52 is mounted at the front end of the connecting rod 510. As shown in FIG. 5A, the first mounting member 51 further includes a first fixing member 513 mounted at the front end of the connecting rod 510. The first fixing member 513 is configured to limit the connecting rod 510 when the connecting rod 510 is connected to the vehicle frame 11. The first mounting member 51 further includes a second fixing member 514 disposed on the connecting rod 510 and located behind the first fixing member 513. The second fixing member 514 is configured to limit the displacement of the buffer mechanism 52. The elastic member 521 is disposed on the connecting rod 510 between the second fixing member 514 and the first fixing member 513. For example, the elastic member 521 is sleeved on the connecting rod 510, and two ends of the elastic member 521 are connected to the first fixing member 513 and the second fixing member 514, respectively. The front end of the connecting rod 510 is slidably connected to the first fixing member 513, the first fixing member 513 allows the connecting rod 510 to slide on the first fixing member 513 along the extension direction of the connecting rod 510, and the first fixing member 513 at least restricts the movement of the connecting rod 510 in a radial direction or in a direction perpendicular to the extension direction, thereby ensuring movement stability. The first fixing member 513 is connected to the vehicle frame 11, so one end of the buffer mechanism 52 is also indirectly connected to the vehicle frame 11, forming a stable support system. For example, the first fixing member 513 is provided with a hole for accommodating the connecting rod 510 and allowing the connecting rod 510 to slide along the extension direction of the connecting rod 510. For example, the hole includes a round hole or a narrow slotted hole with a semi-open slot. For example, the first fixing member 513 and the connecting rod 510 are provided with a key/slot fit structure, a shaft/sleeve fit structure, or a slider/groove fit structure. For example, the first fixing member 513 is provided with a sliding bearing or sliding bushing for accommodating the connecting rod 510 and allowing the connecting rod 510 to slide along the extension direction of the connecting rod 510. For example, the first fixing member 513 is provided with a linear guide rail for accommodating the connecting rod 510 and allowing the connecting rod 510 to slide along the extension direction of the connecting rod 510. The technical solutions in the preceding examples may be implemented individually or in any combination thereof.

As shown in FIG. 5A, the first mounting member 51 further includes a third fixing member 515. The third fixing member 515 is configured to fixedly mount the rear end of the connecting rod 510, that is, the first mounting end 511, to the deck assembly 12. This design allows the sway of the deck assembly 12 to be transmitted to the connecting rod 510. Since the connecting rod 510 and the vehicle frame 11 are connected in a floating manner, the swaying energy is converted into the reciprocating motion of the connecting rod 510 relative to the vehicle frame 11 along the axial direction, rather than directly causing the connecting rod 510 to move relative to the deck assembly 12. In this manner, the impact between the connecting rod 510 and the deck assembly 12 caused by the relative movement between the connecting rod 510 and the deck assembly 12 can be avoided, thereby reducing sway noise and minimizing damage to components. The buffer mechanism 52, such as the elastic member 521 (or a damping spring or a hydraulic buffer), further absorbs and attenuates the movement amplitude of the connecting rod 510, thereby reducing sway noise.

As shown in FIG. 5B, the first mounting member 51 is not provided with the third fixing member. That is to say, one end of the connecting rod 510, that is, the front end, is connected to the vehicle frame 11 in a floating manner, and the other end of the connecting rod 510, that is, the rear end, is connected to the deck assembly 12 in a floating manner. The rear end of the connecting rod 510, that is, the first mounting end 511, is hung on the deck assembly 12. A hanging portion 124 of the deck assembly 12 is provided with a sliding groove, the hanging portion 124 allows the connecting rod 510 to slide in the sliding groove along the extension direction of the connecting rod 510, and the hanging portion 124 at least restricts the movement of the connecting rod 510 in a radial direction or in a direction perpendicular to the extension direction. It is to be understood that the use of floating connections along the extension direction at the front end and the rear end is more conducive to the conversion of the swaying energy.

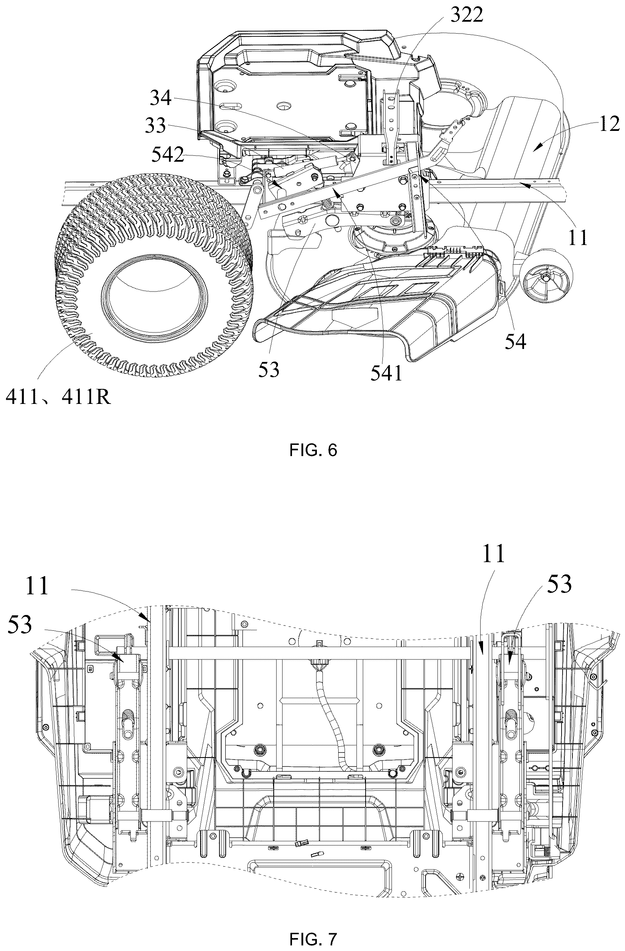

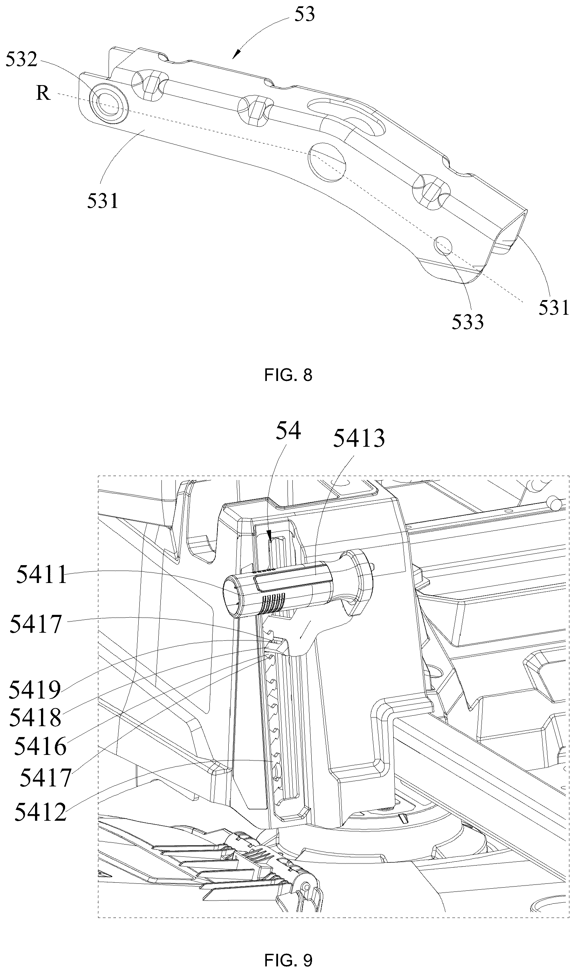

As shown in FIGS. 6 to 8, in this example, the first mounting member 51 is disposed on the front portion of the deck assembly 12 to connect the front portion of the deck assembly 12 to the vehicle frame 11. Since the deck assembly 12 is heavy and has a large area, in this example, second mounting members 53 are further included. The second mounting member 53 is disposed on the rear portion of the deck assembly 12 to connect the rear portion of the deck assembly 12 to the vehicle frame 11, thereby ensuring the installation stability and balance of the deck assembly 12. The second mounting member 53 is disposed on the outer side of the vehicle frame 11. For example, the second mounting member 53 includes at least two mounting ends 532 and 533 that are connected to the deck assembly 12 and the vehicle frame 11, respectively. The second mounting member 53 includes a suspension arm 531 having a U-shaped cross section. For example, each mounting end is connected to the deck assembly 12 or the vehicle frame 11 via at least two sidewalls of the U-shaped suspension arm 531 to ensure the installation stability. The second mounting member 53 has a bend along a length direction, and an extension path R is not a straight line.

In this example, two first mounting members 51 are disposed on two sides of the vehicle frame 11, respectively. Two second mounting members 53 are disposed on two sides of the vehicle frame 11, respectively and located on the outer sides of the vehicle frame 11, thereby ensuring that the span between the connection points is wide enough.

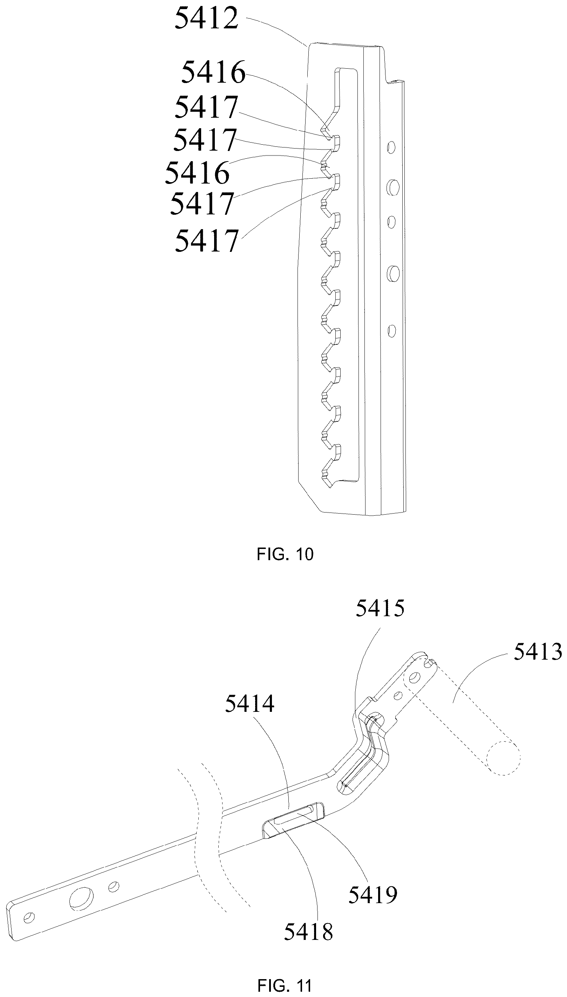

As shown in FIG. 6 and FIGS. 9 to 11, a height adjustment assembly 54 is further included and configured to adjust the height of the deck assembly 12 and the cutting assembly 80 relative to the ground.

The height adjustment assembly 54 includes a gear assembly 541 and a linkage assembly 542. The gear assembly 541 includes an adjustment member 5411 and a limiting member 5412. The adjustment member 5411 is for the user to operate, and the limiting member 5412 is used for limiting the adjustment member 5411 to a preset gear. The linkage assembly 542 connects the gear assembly 541 to the deck assembly 12. In this example, the linkage assembly 542 connects the gear assembly 541 to the second mounting member 53. When the user operates the adjustment member 5411, the adjustment member 5411 is movable to different preset gears relative to the limiting member 5412. The linkage assembly 542 is driven by the adjustment member 5411 to change the height of the deck assembly 12 so that the riding mower 100 has different cutting heights.

The adjustment member 5411 includes an adjustment handle 5413, a gear portion 5414, and a bent portion 5415. The adjustment handle 5413 is for the user to operate. The gear portion 5414 mates with the limiting member 5412 to keep the gear portion 5414 at a preset gear. The bent portion 5415 connects the adjustment handle 5413 to the gear portion 5414.

The limiting member 5412 forms limiting holes 5416. Multiple limiting structures are formed on the hole walls of the limiting holes 5416. The limiting structure is provided with protrusions 5417, one of which extends toward the upper side and the other of which extends toward the lower side. The protrusions 5417 that reduce the opening size are provided on the upper side and the lower side of the opening of the limiting hole 5416. The gear portion 5414 enters and exits the limiting hole 5416 from the opening. The gear portion 5414 includes an extension portion 5418 that protrudes from the sidewall of the gear portion 5414. An attachment portion 5419 with a waist-shaped hole is formed on the extension portion 5418. When the gear portion 5414 enters the limiting hole 5416 corresponding to the height gear, the attachment portion 5419 is attached to the protrusion on the lower side of the limiting hole 5416 so that the deck assembly 12 stays at the corresponding height. When the sway occurs and causes the attachment portion 5419 to sway and bounce upwards unexpectedly, the protrusion 5417 on the upper side of the corresponding limiting hole 5416 enters the attachment portion 5419 to prevent the attachment portion 5419 or the gear portion 5414 from disengaging from the opening of the limiting hole 5416, thereby avoiding a change in the height of the deck assembly 12 and the cutting assembly.

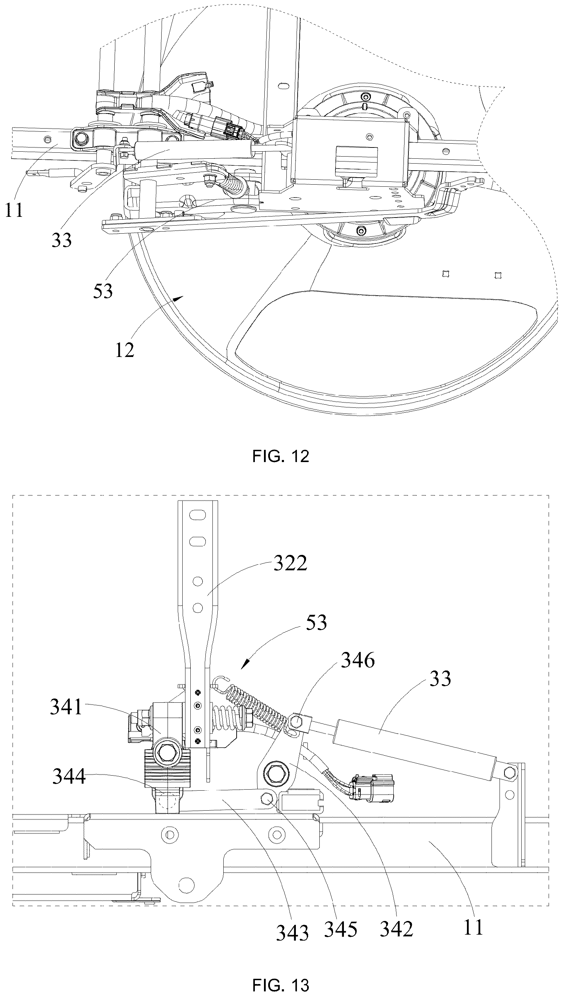

As shown in FIGS. 1, 6, 12, and 13, the first operating lever 31 and the second operating lever 32 of the operating assembly 30 are separately disposed on the machine body 10 to control the traveling state of the wheel set 40. The first operating lever 31 can be held by the left hand of the user and may also be considered as a left operating lever, and the second operating lever 32 can be held by the right hand of the user and may also be considered as a right operating lever. The riding mower 100 of the present application is provided with two operating levers, which are the left operating lever and the right operating lever, and the steering and the straight traveling speed of the riding mower 100 are controlled according to the tilt angles of the left operating lever and the right operating lever. For example, the angles of rotation of the first operating lever 31 and the second operating lever 32 are positively correlated with the traveling speeds. The angle of rotation refers to the angle between the initial position and the current position of the operating lever. When the first operating lever 31 and the second operating lever 32 are at the initial positions, the traveling speed of the wheel set 40 is zero. When the positions of the first operating lever 31 and the second operating lever 32 are at the extreme positions (in this case, the angles of rotation are the largest), the traveling speed of the wheel set 40 is the maximum value corresponding to the current traveling speed gear. The traveling direction of the riding mower 100 is adjusted by making a difference in the angles of rotation of the first operating lever 31 and the second operating lever 32.

For example, the first operating lever 31 is connected to the first drive wheel 411L, and the second operating lever 32 is connected to the second drive wheel 411R. For example, the first operating lever 31 is coupled to a first traveling motor 421, and the second operating lever 32 is coupled to a second traveling motor 422. The first operating lever 31 and the second operating lever 32 independently control the movement of the first drive wheel 411L and the second drive wheel 411R. Optionally, the first operating lever 31 and the second operating lever 32 independently input driving requirements to the first traveling motor 421 and the second traveling motor 422, respectively.

The second operating lever 32 is used as an example. The second operating lever 32 includes a handle portion 321 configured to be grasped by the user's hand. The second operating lever 32 further includes a steering lever 322 configured to be movably connected to the vehicle frame 11 or the wheel set 40. The steering lever 322 and the vehicle frame 11 or the wheel set 40 may be welded, bolted, and/or attached to one another in other manners, and the steering lever 322 is operably connected to the drive wheel (for example, the second drive wheel 411R) of the riding mower 100 to provide steering input to the wheel.

The operating assembly 30 further includes dampers 33, each of which is connected to the operating lever through a connecting portion 34. The second operating lever 32 is used as an example. The damper 33 is connected to the second operating lever 32. The damper 33 is configured to absorb the sway of the second operating lever 32. The damper 33 is disposed above the vehicle frame 11. The damper 33 is mounted on the upper side of the vehicle frame 11. For example, the damper 33 is disposed on a side of the second mounting member 53. For example, the damper 33 is closer to the inner side of the vehicle frame 11 than the first mounting member 51 and/or the second mounting member 53.

For example, the damper 33 includes a rod-shaped damper, such as a hydraulic damper, a gas spring damper, a viscous fluid damper, an electromagnetic damper, a friction damper, a magnetorheological damper, or an elastomeric damper. In some examples, the damper 33 extends along the front and rear direction and performs compression and extension movements along the front and rear direction. The sway of the second operating lever 32 is transmitted to the damper 33 through the connecting portion, thereby causing the damper 33 to deform along the front and rear direction and thus absorbing the sway of the second operating lever 32. One end of the damper 33 is connected to the vehicle frame 11, and the other end of the damper 33 is connected to the second operating lever 32. Optionally, one end of the damper 33 is connected to the vehicle frame 11, and the other end of the damper 33 is connected to the connecting portion 34.

In this example, the connecting portion 34 includes a multi-link structure, including multiple links and pivot shafts, each of which is connected between the links. The connecting portion 34 includes a first link 341 connected to the operating lever (the second operating lever 32 is used as an example), a second link 342 connected to one end of the damper 33, and a third link 343 connected to the first link 341 and the second link 342. The first link 341 and the third link 343 are connected by a first pivot shaft 344, and the third link 343 and the second link 342 are connected by a second pivot shaft 345. Two ends of the third link 343 are provided with pivot shaft connection positions, respectively. The second link 342 is connected to the damper 33 at a fixed angle by a fastener 346. In some examples, the second link 342 is rotatably connected to the damper 33 by the fastener 346. The push and pull force of the operating lever can be efficiently converted into the axial movement of the damper. Moreover, the center-to-center distance between the first pivot shaft 344 and the second pivot shaft 345 is optimized based on kinematic analysis to ensure that no dead point exists in the movement within the stroke range. An anti-disengagement retaining ring is further provided at the end of each pivot shaft, thereby avoiding unintended disengagement of the multiple links while ensuring the degree of freedom of rotation.

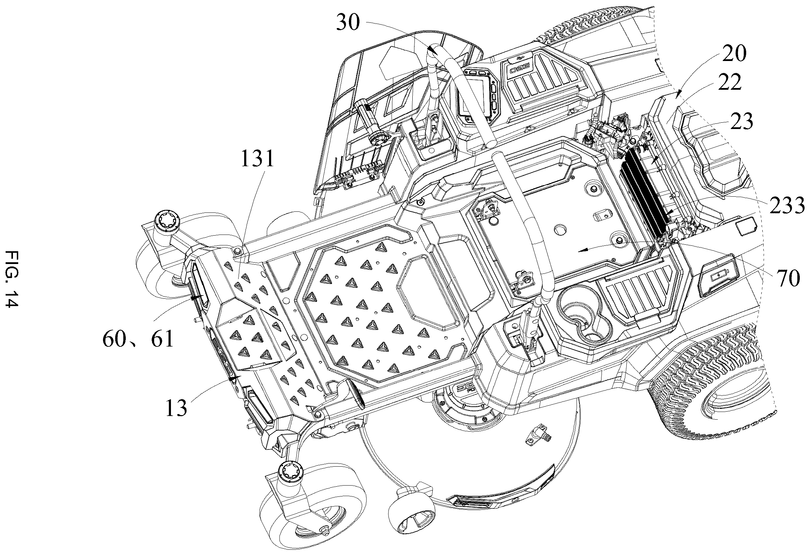

As shown in FIGS. 1 and 14, the riding mower 100 includes an illumination assembly 60 configured to improve the visibility for the riding mower 100. The illumination assembly 60 includes a front illumination assembly 61 extending along the left and right direction and disposed on the front side of the riding mower 100. The light emitted by the front illumination assembly 61 can change the forward field of vision of the riding mower 100.

The front illumination assembly 61 is connected to the vehicle frame 11. In this example, the vehicle frame 11 includes a front frame assembly 13 extending along the left and right direction and disposed on the front side. The front frame assembly 13 forms an accommodation space in which the front illumination assembly 61 is at least partially disposed. The front frame assembly 13 protects the front illumination assembly 61 from collision or scratch damage. In this example, at least one of the front frame assembly 13 and the front illumination assembly 61 includes a waterproof structure to prevent water or moisture from entering during operation, thereby avoiding the degradation of the illumination performance of the front illumination assembly 61 or an electrical short circuit.

In this example, the front frame assembly 13 includes a footrest 131, a front cover 132, and a front cross beam 133. The footrest 131 is disposed in front of the seat 91 and used for supporting the user's feet. The footrest 131 is connected to the vehicle frame 11. For example, the footrest 131 is connected to the vehicle frame 11 by fasteners. The front cover 132 forms the front part of the riding mower 100, and the front illumination assembly 61 emits light outward through the front cover 132. The front cover 132 covers the upper side of the front cross beam 133. In this example, the front cover 132 includes a metal portion 1321 and a plastic portion 1322, where the metal portion 1321 is formed on or connected to the footrest 131, and the plastic portion 1322 is connected to the front cross beam 133. For example, the footrest 131 is formed by bending a steel plate, and a portion of the steel plate of the footrest 131 is bent to the front side and at least partially covers the plastic portion 1322, thereby increasing the strength of the front cover 132. The plastic portion 1322 includes a body portion 1323 and a decorative portion 1324. The body portion 1323 is provided with an illumination hole 1325 so that the front illumination assembly 61 is exposed to the outside through the illumination hole 1325. The decorative portion 1324 is connected to the body portion 1323. For example, the decorative portion 1324 is connected between the front illumination assembly 61 and the illumination hole 1325. The vehicle frame 11 further includes a support plate 134 extending along the up and down direction and connected to the front cross beam 133. The support plate 134 is fixedly connected to the front cross beam 133 to support the front cover 132. The support plate 134 and the front cover 132 form an accommodation space to accommodate the front illumination assembly 61.

The front illumination assembly 61 includes a lamp board 611, a first lamp cover 612, and a second lamp cover 613. The lamp board 611 includes light-emitting diode (LED) lamp beads or may include chip on board (COB) lamp beads. The number of lamp beads and the distance between two adjacent lamp beads may be adjusted as required. The first lamp cover 612 is connected to the lamp board 611, and the first lamp cover 612 is transparent. For example, waterproof sealing using polyurethane (PU) or other chemical foaming materials is performed between the first lamp cover 612 and the lamp board 611. The first lamp cover 612 is connected to the front cover 132. For example, the first lamp cover 612 is connected to the plastic portion 1322 and exposed through the illumination hole 1325. The second lamp cover 613 is disposed on the inner side of the first lamp cover 612, that is, the second lamp cover 613 is disposed between the first lamp cover 612 and the lamp board 611. For example, the second lamp cover 613 is black.

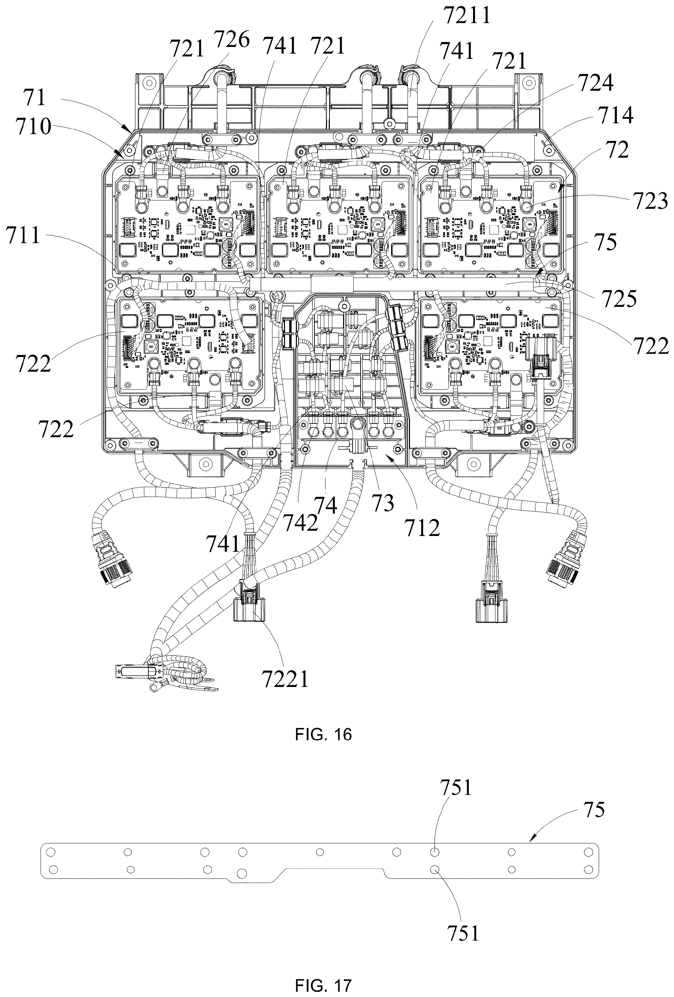

As shown in FIGS. 3 and 14, the riding mower 100 further includes a control module 70, which serves as a control center to control the operation of the components of the riding mower 100 that are electrically connected to the control module 70. As shown in FIGS. 16 to 19, the control module 70 includes multiple control boards 72, each with a controller that can control at least the wheel set 40 and the cutting assembly 80. The control board 72 includes a printed circuit board (PCB) and a flexible printed circuit (FPC) board. The controller uses a dedicated control chip, for example, a single-chip microcomputer and a microcontroller unit (MCU). The controller includes a processor and a memory, the processor is configured to be programmably controlled to implement respective functions, and the memory may store programs to be executed and related data. It is to be noted that the control chip may be integrated into the controller or may be disposed independently of the controller. A structural relationship between a driver chip and the controller is not limited in this example.

In this example, the machine body 10 includes an accommodation region 710 for arranging at least the control boards 72. The accommodation region 710 is divided by a partition feature 713 into a first chamber 711 and a second chamber 712. The multiple control boards 72 are arranged in the first chamber 711, and non-control components are arranged in the second chamber 712. The non-control components include at least an EMC component 73. The EMC component 73 includes a magnetic ring.

When mowing grass, the mower operates under a load. During operation, the requirements for the EMC performance of the electric motor control system are becoming increasingly stringent. The electronic control module must ensure that the EMC performance satisfies the relevant standards, while ensuring the stable output of a large current. However, in the related art, the wiring harness routing space and the space occupied by connection ports result in an insufficiently compact internal layout and lower integration of the module. Such design shortcomings not only affect the stability of the current output, but may also have an adverse effect on the overall performance of the electric motor, and in severe cases, may even lead to a system failure or exceedance of EMC limits. In this example, the partition feature 713 is designed cleverly in the accommodation region 710, thereby dividing the entire space into two functional regions: the first chamber 711 and the second chamber 712. The first chamber 711 is specifically designed for the integrated arrangement of multiple control circuit boards. By optimizing the spacing between the circuit boards and the routing paths, good signal integrity can be ensured and space utilization can be improved. The second chamber 712 is used for accommodating various non-control components, such as a heat dissipation device, a filter assembly, and other auxiliary devices. This division design has multiple advantages. First, the clear division of functional regions makes thermal management more efficient and significantly improves the overall heat dissipation performance of the control box; second, by integrating the non-control components into the main control box, the external control box set up to accommodate these components in the traditional design is completely eliminated, thereby simplifying the system structure and reducing the number of parts and manufacturing costs. This solution featuring high integration not only improves product reliability but also leaves ample room for future function expansion.

In this example, the control module further includes a positive bus bar 74 for connecting positive wires 741 of the multiple control boards 72 and forming the common positive electrode of the control module 70. The positive bus bar 74 is disposed in the second chamber 712, and the EMC component 73 is used for suppressing EMI from the positive wires 741. The positive bus bar 74 is disposed within the accommodation region 710. The common positive wire is connected to positive terminals 742 of the control boards 72 through the positive bus bar 74 and the positive wires 741 of the control boards 72. The wiring harnesses are concentrated, thereby reducing the wiring harness routing space and reducing the overall size of the accommodation region 710 of the control module 70. For example, wiring harness crimping is adopted instead of a junction box.

As shown in FIGS. 16 and 17, the control module 70 further includes a negative electrode conductive plate 75 for electrically connecting negative terminals 751 of the multiple control boards 72. The negative electrode conductive plate 75 is configured to be strip-shaped, and the multiple control boards 72 are distributed on two sides of the negative electrode conductive plate 75 along a length direction. The negative electrode conductive plate 75 is strip-shaped, thereby effectively reducing the dimension of the negative electrode plate. The multiple control boards 72 are distributed on two sides of the strip-shaped negative electrode conductive plate 75, making the wiring harness routing more orderly, avoiding cross-interference, and reducing the risk of EMI. For example, the negative electrode conductive plate 75 is made of an aluminum alloy with high electrical conductivity (such as 5052 or 6061).

In this example, the control module 70 includes the control boards 72. The control board 72 is generally rectangular, with a first long side and a second long side that are opposite to each other. Binding posts 723 for a three-phase wiring harness 724 are disposed on a first side of the control board 72 (for example, a side adjacent to or parallel to the first long side). All binding posts 723 are arranged in a straight line along a length direction of the control board 72 (that is, an extension direction of the first long side). After the three-phase wiring harness 724 is led out from the binding posts 723, the main wire lead-out direction is perpendicular to the length direction of the control board 72. The wire lead-out side of the negative wire (not shown) and the wire lead-out side of the three-phase wiring harness 724 are located on two sides of the control board 72, and the negative terminals 751 of the negative wire (not shown) are arranged in a straight line. Through the straight-line arrangement, the dimension of the negative electrode plate can be effectively reduced, the uniform power supply for the modules can be ensured, and the stability of cutting and traveling performance can be improved.

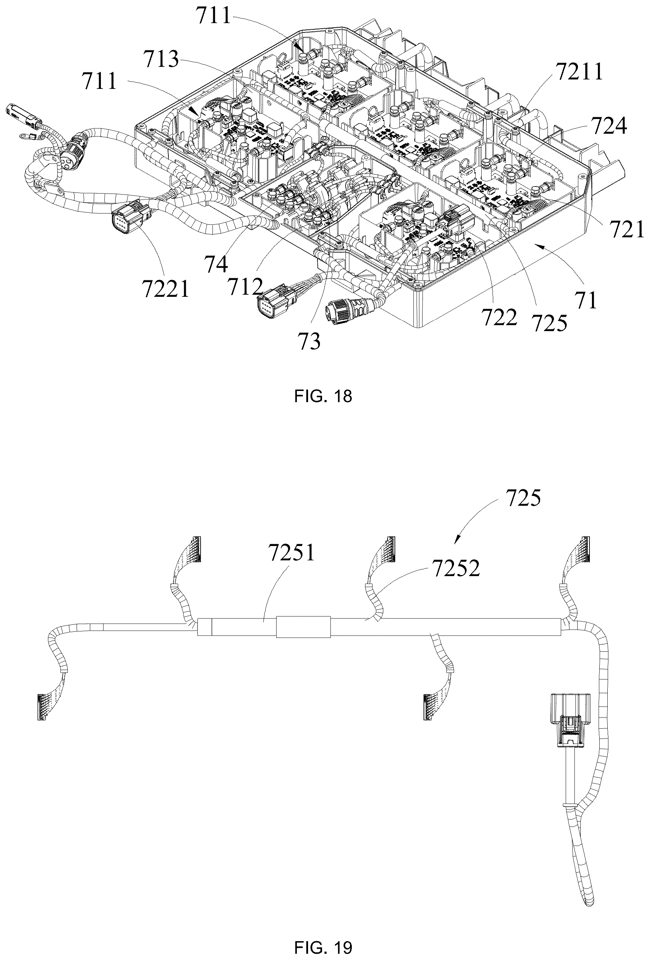

As shown in FIGS. 16 and 18, the control module 70 includes a control box 71, and the accommodation region 710 is formed inside the control box 71. In this example, the first chamber 711 and the second chamber 712 are disposed in the same control box 71. By cleverly designing the partition feature 713 in the control box 71, the space inside the control box 71 is divided into two functional regions: the first chamber 711 and the second chamber 712. By integrating multiple control circuit boards and various non-control components into one control box 71, this solution featuring high integration not only improves product reliability but also leaves ample room for future function expansion.

In this example, the control box 71 is mounted on the vehicle frame 11. For example, at least part of the control box 71 is disposed below the seat 91. The control box 71 may be formed in various shapes or may have various shapes. The control box 71 is made of a material with high thermal conductivity and high specific heat capacity, such as aluminum, a zinc-aluminum alloy, a zinc-aluminum-magnesium alloy, copper, or the like. Optionally, the material of the control box 71 is aluminum or an aluminum alloy casting. The control box 71 should have a solid structure to prevent deformation or damage when an object strikes. In some other examples, the control box 71 is made of a plastic material to ensure the heat dissipation effect of the control module 70 during operation.

The accommodation region 710 within the control box 71 is divided by the partition feature 713 into the first chamber 711 and the second chamber 712. For example, the partition feature 713 is a thin-wall feature protruding from the sidewall of the control box 71. The space within the control box 71 is divided into regions by the continuous or discontinuous thin-wall feature. For example, the partition feature 713 is a placement groove or a protruding placement platform formed on the control box 71. By forming a groove or a protruding platform with regional boundaries, the space of the control box 71 is divided into regions. For example, the control box 71 includes multiple housings that are spliced together to form seams or joint structures, through which controlling and internal region division are performed. For example, the partition feature 713 of the control box 71 may be an indicator feature connected or attached to the housing, such as a line, a sticker, or an etching, and the space within the control box 71 is divided into regions through the indicator feature. Of course, the partition feature 713 further includes other technical features that are easily conceived under the inspiration of the preceding technical solutions, and such features are not exhaustively listed.

In this example, the control module 70 includes multiple cutting control boards 721 and multiple traveling control boards 722. The cutting control board 721 is provided with a cutting controller configured to control the operation of the mowing motor through a corresponding driver circuit. The traveling control board 722 is provided with a traveling controller configured to control the operation of the traveling motor through a corresponding driver circuit. For example, two traveling control boards 722 and three cutting control boards 721 are provided. It is to be understood that the five circuit boards are independent of each other. The two traveling control boards 722 are the same, and the three cutting control boards 721 are the same. In an example, the driver circuit may be a three-phase bridge driver circuit including six controllable semiconductor power devices (such as field-effect transistors (FETs), bipolar junction transistors (BJTs), or insulated-gate bipolar transistors (IGBTs)). It is to be understood that the preceding switching elements may be any other types of solid-state switches, such as IGBTs or BJTs. In some examples, the cutting controller and the traveling controller both adopt vector control. In some examples, the cutting controller and the traveling controller control the running of the electric motors by different control methods. For example, the cutting controller adopts vector control and the traveling controller adopts direct torque control. Alternatively, the cutting controller adopts direct torque control and the traveling controller adopts vector control. Alternatively, the cutting controller adopts vector control and the traveling controller adopts square wave control. Alternatively, the cutting controller adopts square wave control and the traveling controller adopts vector control. Alternatively, the cutting controller adopts square wave control and the traveling controller adopts direct torque control. Alternatively, the cutting controller adopts direct torque control and the traveling controller adopts square wave control. The square wave control is a traditional control technology and is not described in detail here. Under the square wave control, the controller may adjust pulse-width modulation (PWM), a conduction angle, or a lead angle according to the distributed target torque.

The first chamber 711 is configured to be a semi-enclosed chamber, such as a U-shaped chamber, and the second chamber 712 is located inside the opening of the semi-enclosed chamber and adjacent to the opening end of the semi-enclosed chamber. For example, the second chamber 712 is located inside the U-shaped opening of the U-shaped chamber. The cutting control boards 721 are arranged side by side on one side of the semi-enclosed chamber. The traveling control boards 722 are symmetrically arranged on two sides of the semi-enclosed chamber. For example, the cutting control boards 721 are arranged side by side at the bottom of the U-shaped chamber, and the traveling control boards 722 are symmetrically arranged on two sides of the U-shaped chamber. The traveling control board 722 has a first connection terminal 7221 for connecting the traveling motor, and the cutting control board 721 has a second connection terminal 7211 for connecting the cutting motor. The lead-out direction of the second connection terminal 7211 is toward the bottom of the U shape, and the lead-out direction of the first connection terminal 7221 is toward the opening of the U shape. That is to say, the lead-out direction of the first connection terminal 7221 is opposite to the lead-out direction of the second connection terminal 7211. In this example, the multiple control boards 72 are distributed on two sides of the negative electrode conductive plate 75 along a length direction. For example, the cutting control boards 721 are arranged on one side of the negative electrode conductive plate 75, and the traveling control boards 722 are arranged on the other side of the negative electrode conductive plate 75. The positive bus bar 74 is disposed at the opening of the U-shaped chamber.

As shown in FIGS. 16 and 19, the control module 70 is further provided with a signal wiring harness 725. The signal wiring harness 725 includes a harness body 7251 and harness branches 7252 branching out from the harness body 7251. The multiple control boards 72 are distributed on two sides of the harness body 7251 and communicatively connected to different harness branches 7252, respectively. The extension direction of the harness body 7251 is basically consistent with the extension direction of the negative electrode conductive plate 75. The signal wiring harness 725 intersects with the power lines (the positive wires 741 and the negative wires (not shown)), and at least the positive wires 741 of the control boards 72 intersect with the signal wiring harness 725.

In this example, as shown in FIG. 16, the control box 71 is further provided with a water leakage hole 714 located on the lower side of the control boards 72 so that water can be safely drained after accidental water ingress into the control box 71.

An overcurrent protection device 726 is disposed on the control board 72. One end of the overcurrent protection device 726 is connected to the control board 72, and the other end of the overcurrent protection device 726 is fixed to the accommodation region 710. A limiting structure for the overcurrent protection device 726 is provided in the accommodation region 710. For example, the overcurrent protection device 726 includes a fuse configured to protect the driver circuit from current overload, thereby avoiding burning out the circuit, the electric motor, or the like. In the related art, the overcurrent protection device 726 is mounted and limited within a separate mounting box. In this example, the separate fuse mounting box is eliminated, and the overcurrent protection device 726, such as the fuse, is mounted in the accommodation region 710 within the control box 71, thereby reducing the number of parts.

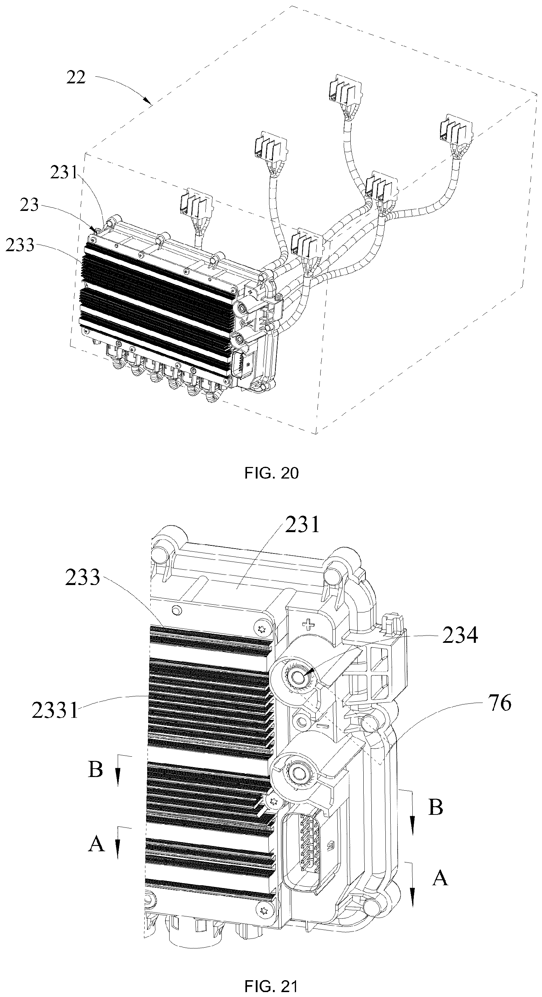

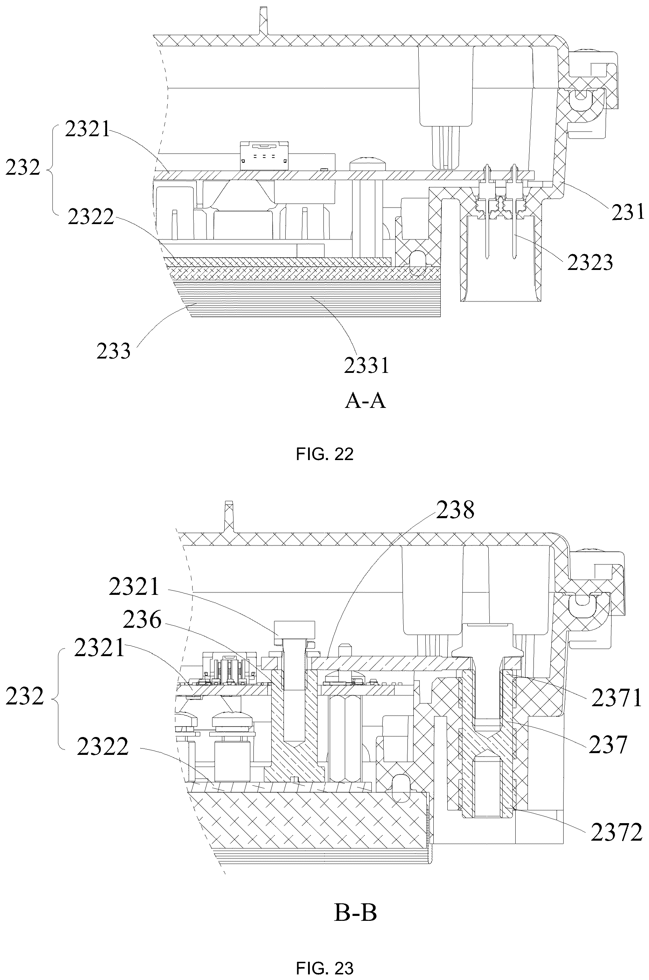

As shown in FIG. 14 and FIGS. 20 to 23, the riding mower 100 further includes a power management module 23 at least partially mounted outside the battery compartment 22, and the power management module 23 controls at least the charging and discharging of the battery packs 21. The power management module 23 includes a battery control board 232 and a heat sink 233, and power terminals 234 on the battery control board 232 extend toward the heat sink 233.

In this example, the power management module 23 includes a power management control box 231, the power management control box 231 forms an accommodation space, the battery control board 232 is disposed within the accommodation space, and the heat sink 233 is at least partially disposed outside the power management control box 231 and used for heat dissipation.

The battery control board 232 includes a first circuit board 2321 and a second circuit board 2322. The first circuit board 2321 is provided with a power management controller (for example, a power management MCU) and includes a PCB. The second circuit board 2322 is provided with power components, such as metal-oxide-semiconductor field-effect transistors (MOSFETs). The first circuit board 2321 and the second circuit board 2322 are arranged to form an upper layer and a lower layer. For example, the first circuit board 2321 is disposed above the second circuit board 2322. The heat sink 233 is disposed on the lower side of the second circuit board 2322. The heat sink 233 includes heat sink fins 2331 made of highly thermal conductive metal (such as aluminum or copper) and extending away from the second circuit board 2322. For example, the heat sink fins 2331 extend downward to form multiple sets of parallel vertical heat sink teeth, thereby significantly increasing the contact area with the air. The spacing between the heat sink fins 2331 is adjusted according to the heat dissipation requirements, and the distance between every two adjacent fins may be consistent or inconsistent.

In this example, the first circuit board 2321 is provided with pin headers 2323 as connection terminals for signal output. In this example, the pin headers 2323 are disposed on the lower surface of the first circuit board 2321. For example, the pin headers 2323 are soldered to the lower surface of the first circuit board 2321, and the extension direction of the pin headers 2323 is the same as the extension direction of the heat sink fins 2331. The pin headers 2323 at least partially extend out of the power management control box 231 and are connected to female headers with cables. The pin headers 2323 extend out of the power management control box 231 toward the heat sink 233 so that the extension direction of the corresponding cables is consistent with the extension direction of the heat sink fins 2331 of the heat sink, and the terminals on the battery control board 232 extend toward the heat sink 233.

In this example, the first circuit board 2321 and the second circuit board 2322 are connected by fasteners 235, and the fastener 235 includes a fastening bolt or a fastening screw. Guide posts 236 made of metal are provided between the first circuit board 2321 and the second circuit board 2322. The guide post 236 connects the first circuit board 2321 to the second circuit board 2322. The fastener 235 is inserted into the guide post 236 to fasten the first circuit board 2321 and the second circuit board 2322 into one piece. In the related art, the guide post 236 for the first circuit board 2321 and the second circuit board 2322 is also a binding post, such as the binding post for the positive electrode or the negative electrode of the power supply. In this case, the terminal of the binding post of the power supply is located on the upper side of the first circuit board 2321 and faces inward, which is not convenient for wiring.

In this example, in addition to the guide posts 236, binding posts 237 for wiring and a copper busbar 238 connected to the guide posts 236 and the binding posts 237 are further included. The binding post 237 extends toward the heat sink 233. A first terminal 2371 (the upper terminal in this example) of the binding post 237 is connected to the guide post 236 via the copper busbar 238. A second terminal 2372 (the lower terminal in this example) of the binding post 237 is used for connecting a cable (for example, a positive/negative wire of the power supply (not shown)). In this example, the second terminal 2372 of the binding post 237 is configured to be the power terminal 234. For example, the second terminal 2372 of the binding post 237 is closer to the heat sink 233 than the first terminal 2371 of the binding post 237. The second terminal 2372 of the binding post 237 extends out of the control box 71 toward the heat sink 233. In this example, through the combination of the copper busbar 238 and the binding post 237, the wiring direction is reoriented from the inner side of the battery compartment 22 to the outer side of the heat sink 233, making wiring more convenient.

In this example, the guide post 236 is fixedly connected to the upper surface of the second circuit board 2322, the first circuit board 2321 is provided with a connection hole, and the guide post 236 passes through the connection hole of the first circuit board 2321 and is connected to the copper busbar 238 through the fastener 235. In this example, the guide post 236 is formed by an aluminum alloy structural member. The binding post 237 is limited by the power management control box 231. The binding post 237 is formed by an aluminum alloy structural member. For example, the binding post 237 and the guide post 236 are arranged basically parallel to each other, or the binding post 237 and the guide post 236 are arranged at an angle.

In this example, the second terminal 2372 (the lower terminal in this example) is configured to be connected to the cable via a flexible conductive portion 76. The power terminal 234 is connected to the cable via the flexible conductive portion 76. The flexible conductive portion 76 significantly improves mechanical adaptability while ensuring electrical performance. The flexible conductive portion 76 adopts a special structural design, which can effectively isolate the mechanical vibration generated during equipment operation and prevent connection loosening or metal fatigue fracture caused by continuous vibration. The flexible conductive portion 76 is suitable for connection scenarios involving relative movement or large installation tolerances.

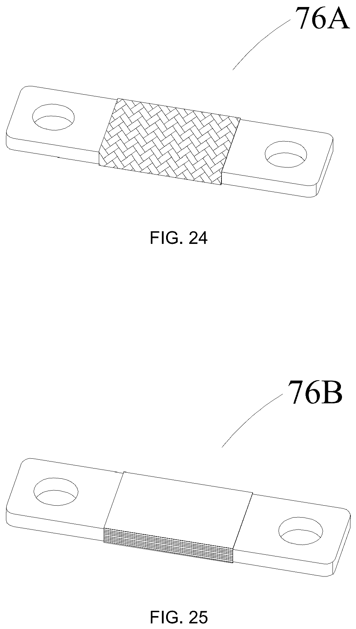

For example, as shown in FIG. 24, the flexible conductive portion 76 includes a copper braided strip/braided wire connection piece 76A formed by the warp and weft braiding of the braided wires and is a flexible conductor with three-dimensional degrees of freedom. When a height difference exists between two connection ends, the braided structure can achieve height compensation through deformation. When an included angle exists between the fixed surfaces, strands of the braided wires can be slid and adjusted independently to adapt to a certain angle of planar deflection.

As shown in FIG. 25, the flexible conductive portion 76 includes a layered flexible connection piece 76B, which is formed by staggered phosphor bronze sheets. Displacement is absorbed through the coordinated deformation of multiple thin sheets, making the flexible conductive portion 76 particularly suitable for application scenarios requiring multi-directional compensation. As for the application scenarios, the flexible conductive portion 76 has the advantage of relatively free spatial arrangement within the confined space compared with the wiring harness. In this example, the flexible conductive portion 76 adopts the copper braided strip/braided wire connection piece 76A.

In this example, the weight of the battery pack 21 is greater than or equal to 9 kg. In an example, the weight of the battery pack 21 is greater than or equal to 10 kg, or greater than or equal to 11 kg, or greater than or equal to 12 kg, or greater than or equal to 13 kg, or greater than or equal to 14 kg, or greater than or equal to 15 kg. For example, the weight of the battery pack 21 is 9 kg, 10 kg, or 15 kg.

In this example, the nominal voltage of the battery pack 21 is about 56 V. For example, the nominal voltage of the battery pack 21 may be 54 V or 58 V. In an example, the nominal voltage of the battery pack 21 is greater than or equal to 56 V, or greater than or equal to 50 V, or greater than or equal to 48 V, or greater than or equal to 40 V.

In this example, the capacity of the battery pack 21 is greater than or equal to 20 Ah. In an example, the capacity of the battery pack 21 is greater than or equal to 30 Ah, or greater than or equal to 40 Ah, or greater than or equal to 50 Ah. For example, the capacity of the battery pack 21 may be 20 Ah, 30 Ah, 40 Ah, or 50 Ah. The ratio of the capacity of the battery pack 21 to the weight of the battery pack 21 is greater than or equal to 2 Ah/kg, for example, 2 Ah/kg, 4 Ah/kg, or 5 Ah/kg. Optionally, the energy of the battery pack 21 is greater than or equal to 2 kW·h. In an example, the energy of the battery pack 21 is greater than or equal to 3 kW·h, or greater than or equal to 4 kW·h, or greater than or equal to 5 kW·h. For example, the energy of the battery pack 21 may be 2 kW·h, 3 kW·h, 4 kW·h, or 5 kW·h.

In some examples, the battery pack 21 disclosed in the present application may be a lithium battery pack, a solid-state battery pack, or a pouch battery pack. The battery pack 21 disclosed in the present application includes lithium iron phosphate cells. In some examples, the battery pack 21 may be a supercapacitor, also referred to as an electrochemical capacitor.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A mower (100), comprising:
a machine body (10) comprising a vehicle frame (11);
a wheel set (40) that supports the machine body;
a cutting assembly (80) mounted on the machine body and comprising a cutting element for cutting vegetation;
a deck assembly (12) mounted on the vehicle frame and accommodating the cutting element; and
a deck mounting assembly (50) comprising a first mounting member (51), wherein one mounting end (511) of the first mounting member is connected to the deck assembly, and another mounting end (512) of the first mounting member is connected to the vehicle frame;
wherein at least one mounting end of the first mounting member is connected in a floating manner, and at least one mounting end of the first mounting member is provided with a buffer mechanism (52).

2. The mower of claim 1, wherein the cutting assembly further comprises a mowing motor (82) mounted on the deck assembly.

3. The mower of claim 1, wherein the buffer mechanism absorbs movement of the first mounting member relative to the deck assembly.

4. The mower of claim 1, wherein the buffer mechanism comprises an elastic member (521).

5. The mower of claim 1, wherein the first mounting member comprises a connecting rod (510), a front end of the connecting rod is connected to the vehicle frame in the floating manner, and a rear end of the connecting rod is fixedly mounted to the deck assembly.

6. The mower of claim 5, wherein in a case where the deck assembly sways, the deck assembly causes the connecting rod to move along an extension direction of the connecting rod.

7. The mower of claim 5, wherein a body of the connecting rod is a cylindrical metal structure.

8. The mower of claim 5, wherein the first mounting member further comprises: a first fixing member (513), wherein the first fixing member is mounted to the front end of the connecting rod and limits the connecting rod when the connecting rod is connected to the vehicle frame; and a second fixing member (514) disposed on the connecting rod and located behind the first fixing member.

9. The mower of claim 8, wherein the buffer mechanism is disposed between the first fixing member and the second fixing member.

10. The mower of claim 8, wherein the front end of the connecting rod is slidably connected to the first fixing member, and the first fixing member allows the connecting rod to slide on the first fixing member along an extension direction of the connecting rod.

11. The mower of claim 8, wherein the first mounting member further comprises a third fixing member (515) disposed at the rear end of the connecting rod to fixedly mount the connecting rod to the deck assembly.

12. The mower of claim 5, wherein the first mounting member is disposed on a front portion of the deck assembly, and the deck mounting assembly further comprises a second mounting member (53) disposed on a rear portion of the deck assembly and disposed on an outer side of the vehicle frame.

13. The mower of claim 12, wherein the second mounting member comprises a suspension arm (531) having a U-shaped cross section.

14. The mower of claim 1, further comprising:
an operating lever (31, 32) that is disposed on the machine body and controls a traveling state of the wheel set; and
a damper (33) that is connected to the operating lever through a connecting portion (34) and absorbs sway of the operating lever, wherein the damper is disposed above the vehicle frame and is closer to an inner side of the vehicle frame than the first mounting member.

15. The mower of claim 14, wherein the connecting portion comprises a plurality of links and pivot shafts, and each of the pivot shafts is connected between two of the plurality of links.
